# FASCICULE DE BREVET EUROPEEN

(11) **EP 3 431 254 B1**
(45) Date de publication et mention de la délivrance du brevet: **22.04.2020**
(21) Numéro de dépôt: 18305946.8
(22) Date de dépôt: 13.07.2018
(51) Int. Cl.: B29C 49/78, B29C 49/42, B29C 49/06, B29C 49/36

(54) **PROCEDE DE MAINTENANCE D'UNE INSTALLATION DE FORMAGE DE RECIPIENTS, INCLUANT UNE PROCEDURE DE RESYNCHRONISATION**
WARTUNGSVERFAHREN EINER FORMANLAGE VON BEHÄLTERN, EINSCHLIESSLICH RESYNCHRONISIERUNGSVERFAHREN
MAINTENANCE METHOD OF A PLANT FOR FORMING CONTAINERS, INCLUDING A RESYNCHRONISATION PROCEDURE

(30) Priorité: 21.07.2017 FR 1756946
(43) Date de publication de la demande: 23.01.2019
(73) Titulaire: Sidel Participations, 76930 Octeville-sur-Mer (FR)
(72) Inventeur: SANTAIS, Franck, 76930 Octeville-sur-mer (FR); PETIT, Fabian, 76930 Octeville-sur-mer (FR)
(74) Mandataire: Grassin d'Alphonse, Emmanuel Jean Marie

(56) Documents cités:
- DE-A1-102013 014 618
- DE-A1-102014 005 321
- DE-A1-102014 012 528
- US-A1- 2015 273 754
- US-B2- 8 651 853

## Description

L'invention a trait à la production des récipients à partir d'ébauches en matière plastique tel que PET. Plus précisément, l'invention concerne la maintenance d'une installation de production de récipients. De telles installations sont par exemple décrites dans les documents US8651853B2, US2015/273754A1 et DE102014012528A1.

Une installation de production de récipients comprend classiquement une machine de soufflage équipée d'un carrousel tournant, et d'une pluralité de postes de formage incluant chacun un moule monté sur le carrousel.

Chaque moule peut adopter une position ouverte permettant l'introduction d'une ébauche (préalablement chauffée à une température supérieure à la température de transition vitreuse de la matière - laquelle est de 80°C environ dans le cas du PET), et une position fermée permettant le formage d'un récipient à partir de l'ébauche par injection dans celle-ci d'un fluide sous pression (typiquement de l'air). L'ouverture et la fermeture de chaque moule est généralement assurée par un mécanisme à bielles, commandé par une came.

Le carrousel est entraîné dans un mouvement de rotation cyclique au moyen d'une motorisation primaire ; il s'agit par ex. d'un moteur-couple piloté par une unité de contrôle électronique ou informatique, qui, par un codeur monté sur le carrousel, est informée de la position angulaire instantanée de celui-ci.

L'installation comprend généralement, en amont ou, respectivement, en aval d'une telle machine de soufflage, au moins un dispositif de transfert incluant une roue pourvue d'une pluralité d'organes de préhension (typiquement des pinces), chacun apte, lors de la rotation de la roue, à venir se placer en un point de transfert où l'organe de préhension est normalement aligné sur un moule pour y introduire une ébauche ou, respectivement, y prélever un récipient.

Une motorisation secondaire est couplée à la roue - et synchronisée à la motorisation primaire - pour entraîner la roue dans une rotation cyclique synchronisée avec celle du carrousel de la machine de soufflage.

La motorisation peut également être un moteur-couple piloté par l'unité de contrôle, qui, par un codeur monté sur la roue, est informée de la position angulaire instantanée de celle-ci, ce qui lui permet d'assurer la synchronisation de la roue avec le carrousel.

Les cadences de production d'une telle installation sont élevées. Une machine de soufflage équipée d'une vingtaine de postes de formage produit environ 40 000 récipients par heure, soit environ dix récipients chaque seconde. En d'autres termes, chaque transfert est réalisé en 1/10^{e} de seconde environ.

Il est donc essentiel que la synchronisation du carrousel et de la roue du dispositif de transfert soit précise, afin de garantir qu'un organe de préhension soit correctement positionné au droit de chaque moule au point de transfert, et ce au moins dix fois par seconde.

Cependant des incidents surviennent. Il arrive notamment que le mécanisme d'ouverture et de fermeture d'un moule se grippe, par ex. lorsqu'un corps étranger s'est interposé entre le mécanisme et la came, ou encore lorsqu'une pièce, déformée par l'usure ou la fatigue, se déforme, se fissure ou se casse.

Dans une telle situation, la machine de soufflage doit être arrêtée en urgence. Le défaut ayant provoqué l'arrêt d'urgence, ou l'arrêt lui-même, peut induire un désalignement d'un dispositif de transfert par rapport au carrousel (c'est-à-dire que les organes de préhension ne sont plus alignés sur les moules au point de transfert), ce qui se traduit par une désynchronisation de la motorisation primaire et de la motorisation secondaire.

Les opérations de maintenance nécessitées par cette situation sont délicates, et doivent être conduites avec précaution. Les cols des récipients (ou des ébauches) présents dans les moules situés de part et d'autre du point de transfert sont des obstacles au libre mouvement des organes de préhension, et risquent, lors d'une rotation non contrôlée de la roue du dispositif de transfert, d'endommager ces derniers.

Aussi, avant qu'il ne soit procédé aux opérations de maintenance, convient-il de vidanger manuellement de leurs récipients (ou de leurs ébauches) les moules situés en amont et en aval du point de transfert.

Mais les moules immédiatement voisins du point de transfert sont inaccessibles : il faudrait faire pivoter le carrousel pour les libérer. Or une telle rotation est dangereuse en raison des risques de casse des organes de préhension pour les raisons évoquées ci-dessus.

L'invention vise à proposer une solution remédiant aux difficultés précitées, grâce à un procédé de maintenance permettant de faire pivoter le carrousel et de vidanger les moules sans risque d'endommager les organes de préhension du dispositif de transfert, et par conséquent permettant de mener à bien, sans risque de casse, les opérations de maintenance nécessaires.

A cet effet, il est proposé un procédé de maintenance d'une installation de production de récipients à partir d'ébauches en matière plastique, qui comprend :
- Une machine de soufflage comprenant un carrousel tournant et une pluralité de postes de formage incluant chacun un moule monté sur le carrousel et pouvant adopter une position ouverte pour permettre l'introduction d'une ébauche et l'évacuation d'un récipient, et une position fermée pour permettre le formage d'un récipient à partir de l'ébauche ;
- Une motorisation primaire couplée au carrousel pour entraîner celui-ci dans une rotation cyclique ;
- Un dispositif de transfert, qui comprend une roue pourvue d'une pluralité d'organes de préhension, chacun apte, lors de la rotation de la roue, à venir se placer en un point de transfert où l'organe de préhension est normalement aligné sur un moule pour y introduire une ébauche ou y prélever un récipient ;
- Une motorisation secondaire couplée à la roue et synchronisée à la motorisation primaire pour entraîner la roue dans une rotation cyclique synchronisée avec celle du carrousel ;
- Une unité de contrôle reliée aux motorisations ;
ce procédé comprenant les étapes suivantes :
- Détection d'un défaut d'alignement des organes de préhension par rapport aux moules ;
- Immobilisation du carrousel et de la roue ;
- Désynchronisation des motorisations ;
- Définition, dans un repère lié au carrousel, d'une zone de resynchronisation positionnée entre deux moules situés, lors de l'immobilisation, de part et d'autre du point de transfert ;
- Rotation partielle désynchronisée du carrousel et/ou de la roue, jusqu'au placement d'un organe de préhension dans la zone de resynchronisation ;
- Resynchronisation des motorisations ;
- Rotation synchronisée, pas-à-pas, du carrousel et de la roue pour permettre le retrait des ébauches ou des récipients des moules voisins du point de transfert ;
- Désynchronisation des motorisations ;
- Rotation partielle désynchronisée du carrousel et/ou de la roue, jusqu'à recaler l'alignement des organes de préhension sur les moules ;
- Resynchronisation des motorisations.

Selon un mode particulier de réalisation ces étapes sont, en tout ou en partie, commandées par impulsion sur une manette de commande pas-à-pas, reliée à l'unité de contrôle.

La position angulaire instantanée du carrousel et celle de la roue sont de préférence fournies à l'unité de contrôle par un codeur.

Quant à la zone de resynchronisation, elle est par exemple située à égale distance de deux moules voisins.

D'autres objets et avantages de l'invention apparaîtront à la lumière de la description d'un mode de réalisation, faite ci-après en référence aux dessins annexés dans lesquels :
- les **FIG.1** et **FIG.2** sont des vues en perspective partielle, sous deux angles différents, montrant une installation de production de récipients à partir d'ébauches en matière plastique, qui comprend un carrousel équipé d'une pluralité de moules, et de roues de transfert des ébauches et des récipients ;
- la **FIG. 3** est une vue partielle de dessus de l'installation des **FIG.1** et **FIG.2****,** illustrant une situation de désynchronisation accidentelle du carrousel et d'une roue de transfert ;
- la **FIG.4** est une vue de détail, à plus grande échelle, selon le médaillon IV de la **FIG.3****,** centré sur un point de transfert ;
- la **FIG.5** est une vue similaire à la **FIG.3****,** illustrant une étape de raccordement d'une manette de télécommande pas-à-pas et une étape de resynchronisation sur le carrousel de la machine de formage ;
- les **FIG.6** à **FIG.9** sont des vues similaires à la **FIG.5****,** illustrant les étapes successives d'une procédure de resynchronisation de la machine de soufflage et du dispositif de transfert.

Sur les dessins est partiellement représentée une installation **1** de production de récipients **2** à partir d'ébauches **3** en matière plastique. Selon un mode de réalisation illustré sur les dessins, les ébauches **3** sont des préformes, directement issue d'un moulage par injection. Cependant dans d'autres modes de réalisation, les ébauches **3** pourraient être des récipients intermédiaires, ayant subi une ou plusieurs opérations préparatoires (comme un présoufflage). La matière est par ex. un polytéréphtalate d'éthylène (PET).

L'installation **1** comprend, en premier lieu, une machine 4 de soufflage, équipée d'un carrousel **5** tournant et d'une pluralité de postes **6** de formage incluant chacun un moule **M** monté sur le carrousel **5** et pouvant adopter :
- une position ouverte pour permettre l'introduction d'une ébauche **3** et l'évacuation d'un récipient **2** formé, et
- une position fermée pour permettre le formage d'un récipient **2** à partir d'une ébauche **3.**

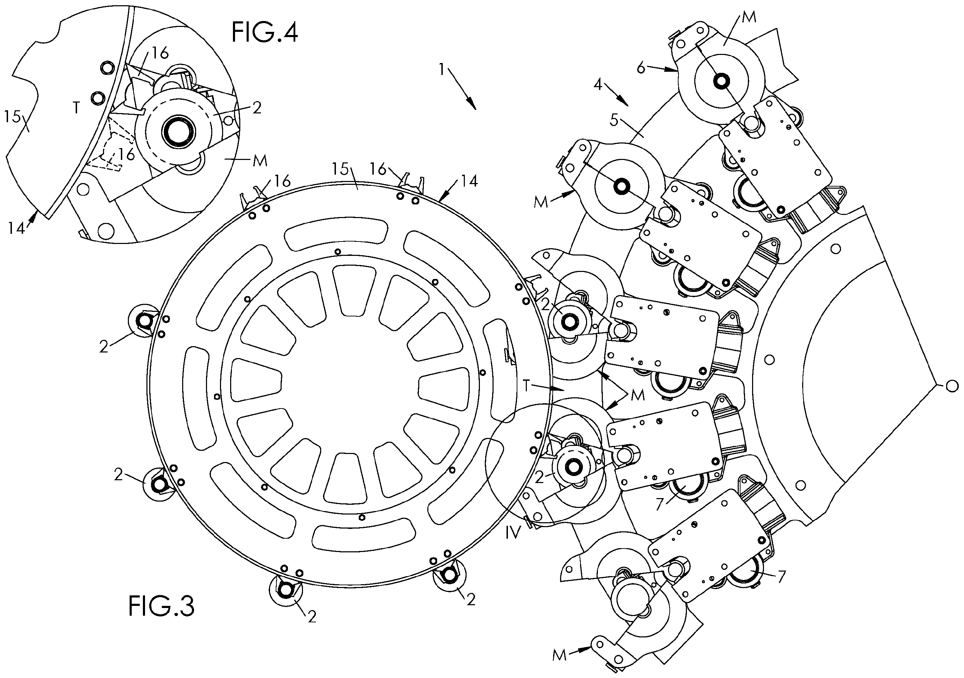

Selon un mode de réalisation illustré sur les dessins, et notamment sur la **FIG.3****,** chaque moule **M** comprend deux demi-moules articulés autour d'une charnière pour être écartés l'un de l'autre (ce qui correspond à la position ouverte du moule **M),** ou réunis (ce qui correspond à la position fermée du moule **M)** pour définir conjointement une empreinte du modèle de récipient à former.

Chaque moule **M** est équipé d'un mécanisme **7** d'ouverture et de fermeture (par ex. à bielles et came).

Chaque poste **6** de formage comprend en outre un dispositif d'injection, dans chaque ébauche **3** (préalablement chauffée et introduite dans un moule **M),** d'un fluide sous pression (par ex. de l'air) pour déformer l'ébauche **3** jusqu'à lui conférer l'empreinte du modèle de récipient lorsqu'elle est plaquée intérieurement contre le moule **M.**

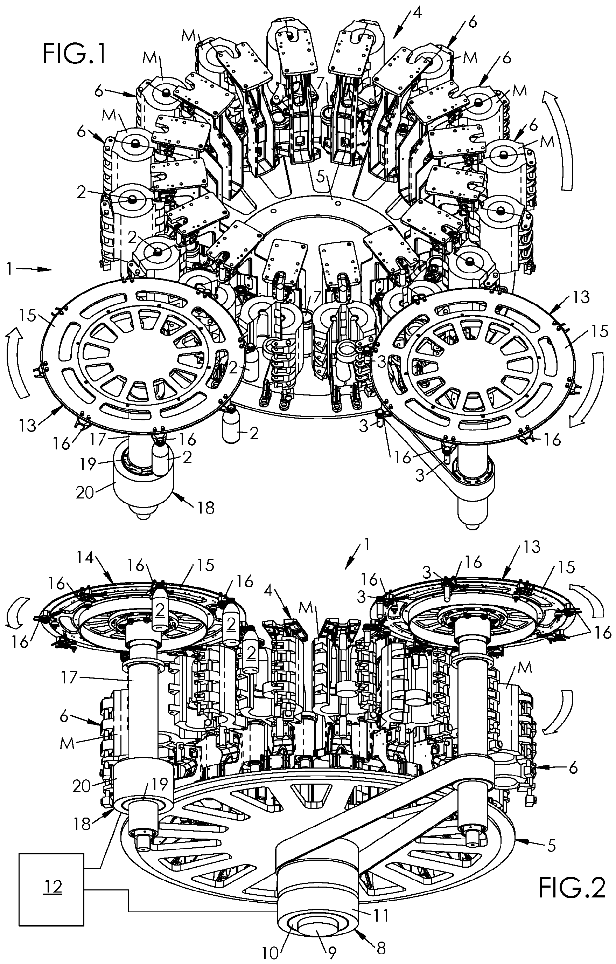

L'installation **1** comprend, en deuxième lieu, une motorisation **8** primaire accouplée au carrousel **5** pour l'entraîner dans un mouvement cyclique rotatif. Comme on le voit sur la **FIG.2****,** le carrousel **5** est pourvu d'un arbre **9** central : c'est à cet arbre **9** qu'est accouplée la motorisation **8** primaire.

Selon un mode particulier de réalisation, la motorisation **8** est du type moteur-couple, c'est-à-dire qu'il s'agit d'un servomoteur sans balais à aimants permanents (encore appelé moteur synchrone à aimants permanents, ou encore moteur sans balais à courant continu). Divers modèles sont notamment proposés par la société Etel. Cette motorisation **8** comprend ainsi un rotor **10** central, directement monté sur l'arbre **9** (et solidaire en rotation de celui-ci) et un stator **11** périphérique.

Selon un exemple de réalisation, la motorisation **8** primaire comprend une ou plusieurs bobines solidaire(s) du stator **11,** et une série d'aimants permanents solidaires du rotor **10.** Lorsque la bobine est parcourue par un courant électrique, elle induit dans les aimants permanents une force électromotrice qui anime le rotor **10** d'un mouvement de rotation dont la vitesse est proportionnelle à l'intensité du courant.

L'installation **1** comprend, en troisième lieu, une unité **12** (électronique ou informatique) de contrôle programmable, reliée à la motorisation **8** primaire.

Dans le mode de réalisation illustrée, l'unité **12** de contrôle est reliée au stator **11** pour commander l'intensité du courant délivré à la bobine. Cette unité **12** de contrôle se présente par ex. sous forme d'un automate programmable industriel (API), pourvu d'une électronique de commande (par ex. un processeur) et une interface homme-machine (typiquement un écran associé à un clavier, ou éventuellement un écran tactile) par laquelle un opérateur peut introduire des instructions ou prendre connaissance d'informations relatives au fonctionnement de l'installation **1.**

L'installation **1** comprend, en quatrième lieu, au moins un dispositif **13, 14** de transfert, qui comprend une roue **15** pourvue d'une pluralité d'organes **16** de préhension, chacun apte, lors de la rotation de la roue **15,** à venir se placer en un point **T** de transfert où l'organe de préhension est normalement aligné sur un moule **M** pour y introduire une ébauche 3 ou, respectivement, y prélever un récipient **2.**

Dans l'exemple illustré notamment sur la **FIG.1****,** l'installation **1** comprend deux dispositifs de transfert, à savoir :
- Un dispositif **13** de transfert amont, configuré et positionné pour transférer des ébauches **3** vers le carrousel **5** en vue de leur formage en récipients **2,** et
- Un dispositif **14** de transfert aval, configuré et positionné pour prélever des récipients **2** du carrousel **5** en vue d'opérations ultérieures (tel que remplissage, bouchage, étiquetage).

Selon un mode de réalisation illustré sur les dessins, et en particulier sur les **FIG.2****,** **FIG.3** et **FIG.4****,** la roue **15** est montée sur un arbre **17** tournant, et les organes **16** de préhension se présentent sous forme de pinces réparties à la périphérie de la roue **15** et pourvues chacune d'une paire de mors aptes à venir s'encliqueter sur le col d'un récipient **2** (ou d'une ébauche **3**)**.**

Selon un mode de réalisation illustré sur la **FIG.2****,** au moins la roue **15** du dispositif **14** de transfert aval est mue en rotation par une motorisation **18** secondaire reliée à (et pilotée par) l'unité **12** de contrôle. La motorisation **18** secondaire est avantageusement du type moteur-couple et comprend un rotor **19** solidaire de l'arbre **17** et un stator **20** relié à l'unité **12** de contrôle qui en commande l'intensité du courant d'alimentation.

L'unité **12** de contrôle est programmée pour synchroniser la rotation de la roue (c'est-à-dire de la motorisation **18** secondaire) à celle du carrousel (c'est-à-dire de la motorisation **8** primaire), de manière que chaque organe **16** de préhension parvienne systématiquement au droit d'un moule **M** pour en décharger, à l'ouverture de celui-ci, le récipient **2** à peine formé.

A cet effet, le carrousel **5** et la roue **15** du dispositif **14** de transfert aval sont tous deux équipés d'un codeur qui fournit à l'unité **12** de contrôle la position angulaire instantanée du carrousel **5** et, respectivement, de la roue **15.**

En fonctionnement normal de l'installation **1,** la rotation de la roue **15** de chaque dispositif **13, 14** de transfert (notamment du dispositif **14** de transfert aval) est synchronisée avec celle du carrousel **5,** de sorte qu'un organe **16** de préhension se positionne dans l'alignement d'un moule **M** à chaque passage par le point T de transfert.

On suppose néanmoins, dans ce qui suit, qu'il se produit un défaut d'alignement (accidentel) d'une roue **15** (par ex. celle du dispositif **14** de transfert aval) par rapport au carrousel **5,** c'est-à-dire un défaut d'alignement des organes **16** de préhension par rapport aux moules **M.** Concrètement, les organes **16** de préhension sont soit en retard, soit en avance sur les moules M.

Dans le médaillon de détail de la **FIG.4****,** on a représenté en pointillés la position normale d'un organe **16** de préhension par rapport à un moule M, et, en trait plein, une position désalignée (correspondant à une désynchronisation de la roue **15** par rapport au carrousel **5**) dans laquelle l'organe **16** représenté est, compte tenu du sens de rotation de la roue **15** (horaire dans l'orientation choisie sur la **FIG.4**) et du carrousel **5** (antihoraire dans cette même orientation), en avance par rapport au moule M.

On décrit dans ce qui suit une procédure de maintenance à l'issue de laquelle l'installation **1** est à nouveau en ordre de marche.

Une première opération consiste à détecter le défaut d'alignement des organes **16** de préhension par rapport aux moules **M.** Cette détection peut être réalisée à l'aide de capteurs (par ex. de capteurs de présence) montés sur la roue **15** ou sur le carrousel **5.** Cependant, cette détection peut être réalisée par simple comparaison de la position angulaire réelle de la roue **15,** telle que mesurée par son codeur et prise en compte par l'unité **12** de contrôle, avec la position théorique que la roue **15** devrait occuper.

Dès lors qu'une différence existe entre la position angulaire réelle de la roue **15** et sa position théorique, l'unité **12** de contrôle en déduit qu'il s'est produit un désalignement des organes **16** de préhension par rapport aux moules **M.**

Dans ce qui suit, et comme illustré sur les dessins (notamment sur les **FIG.3** à **FIG.9**), on suppose que c'est le dispositif **14** de transfert aval qui est désaligné.

Comme le carrousel **5** et la roue **15** sont toujours synchronisés, poursuivre la production sans recaler le dispositif **14** de transfert sur le carrousel **5** ne peut conduire qu'à un endommagement de pièces du dispositif **14** de transfert et/ou du carrousel **5.**

Il est donc nécessaire d'interrompre la production en stoppant le carrousel **5** (et la roue **15**), afin de diligenter une opération de maintenance, puis de recaler la roue **15** sur le carrousel **5** avant de faire redémarrer la production.

C'est pourquoi l'opération suivante consiste, pour l'unité **12** de contrôle, à commander l'immobilisation du carrousel **5** et de la roue **15.**

Cette immobilisation peut être effectuée par commande des moteurs-couples **8, 18,** qui se comportent alors comme des freins électromagnétiques. L'immobilisation peut éventuellement être parachevée par freinage mécanique ou fluidique (hydraulique ou pneumatique).

Une fois le carrousel 5 et le(s) dispositif(s) **13, 14** de transfert immobilisés, l'installation 1 est sécurisée et l'opération de maintenance, qui nécessite l'intervention d'un opérateur, peut être autorisée.

On note :
- **M1** le moule situé immédiatement en aval du point **T** de transfert (dans le sens de rotation du carrousel **5**),
- **M2** le moule situé immédiatement en amont, et
- **M3** et **M4** les deux moules suivants, situés encore en amont du moule **M2.**

Les moules **M3** et **M4** peuvent (et doivent) être vidangés de leurs récipients **2** respectifs car, comme nous le verrons, les opérations conduites lors de la maintenance vont les amener au voisinage du point **T** de transfert, avec le risque que leurs récipients **2** respectifs ne viennent interférer avec les organes de préhension.

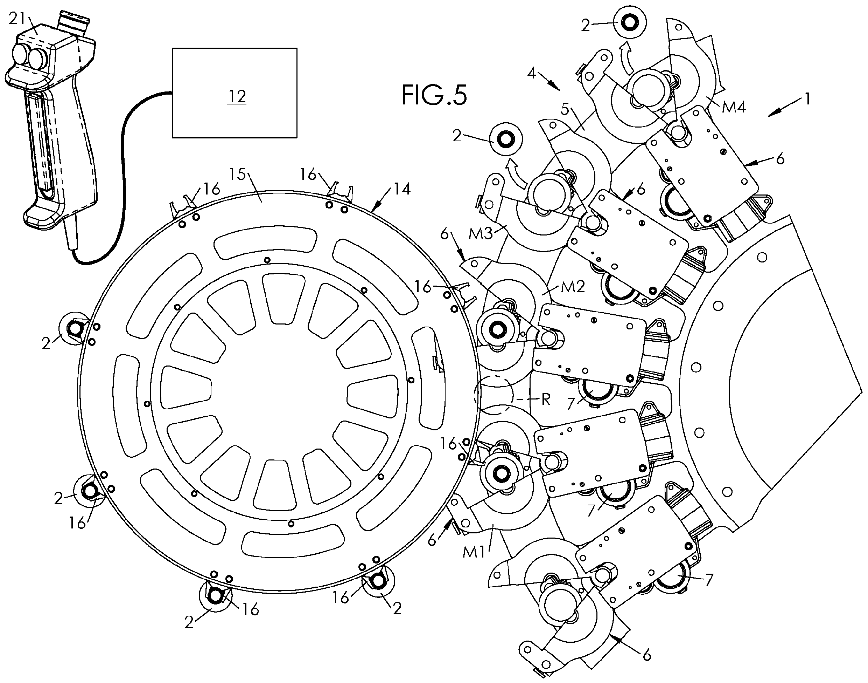

Les moules **M3** et **M4** sont accessibles, et leur vidange peut être réalisée à la main sans qu'il soit nécessaire de commander une rotation du carrousel **5** ou du dispositif **14** de transfert. La vidange des moules **M3** et **M4** peut cependant nécessiter leur ouverture forcée, ce qui peut être réalisé par un déverrouillage et un écartement manuel des demi-moules, comme illustré sur la **FIG.5****.**

En revanche, comme nous l'avons déjà expliqué, il est également nécessaire de vidanger les moules **M1** et **M2** situés de part et d'autre du point **T** de transfert, pour éviter tout endommagement matériel lors de la rotation (commandée manuellement, comme nous le verrons ci-après), du carrousel **5** et/ou de la roue **15** du dispositif de transfert concerné (ici le dispositif **14** de transfert aval). Mais cette vidange ne peut être réalisée sans imprimer au carrousel **5** une rotation afin d'amener d'abord le moule **M1,** puis le moule **M2,** dans une zone où la vidange peut effectivement être réalisée.

Cette rotation est commandée manuellement par l'opérateur chargé de la maintenance. Le terme « manuel » ne signifie pas nécessairement que c'est à la force du bras que l'opérateur fait pivoter le carrousel **5.** En pratique, il est préférable que cette rotation soit ordonnée par l'opérateur au moyen d'une manette **21** de télécommande pas-à-pas, tout en étant effectuée sur commande de l'unité **12** de contrôle, afin que celle-ci conserve la connaissance de la position angulaire du carrousel **5** et du dispositif **14** de transfert.

Si la manette **21** n'est pas déjà branchée à l'unité **12** de contrôle, l'opérateur est invité à le faire, par ex. au moyen d'un message généré par l'unité **12** de contrôle et qui s'affiche sur son interface homme-machine.

Le branchement de la manette **21,** illustré dans le coin supérieur gauche de la **FIG.5****,** est détecté par l'unité **12** de contrôle.

L'unité **12** de contrôle commande la désynchronisation des motorisations **8, 18** respectives du carrousel 5 et du dispositif **14** de transfert.

Cependant, l'unité **12** de contrôle demeure reliée aux codeurs du carrousel **5** et du dispositif **14** de transfert, de sorte qu'elle est informée en permanence de leurs positions angulaires instantanées respectives.

Le dispositif **14** de transfert et le carrousel **5** vont être repositionnés angulairement l'un par rapport à l'autre de manière à permettre leur rotation mutuelle sans risque d'interférence matérielle des organes **16** de préhension avec les moules **M.** Plus précisément, ce repositionnement vise à positionner les organes **16** de préhension de manière à ce que leur passage par le point **T** de transfert se produise, pendant la phase de maintenance, dans une zone **R,** dite de resynchronisation, située entre deux moules **M** successifs.

A cet effet, l'unité **12** de contrôle définit, dans un repère mobile lié au carrousel **5,** une zone **R** de resynchronisation positionnée entre les deux moules **M1, M2** situés, lors de l'immobilisation, de part et d'autre du point **T** de transfert.

Le repère lié au carrousel **5** est un repère qui peut être défini par un point **O** central (situé sur l'axe de rotation du carrousel **5**) et un axe radial, perpendiculaire à l'axe de rotation au point **O** central.

Selon un mode de réalisation, la zone **R** de resynchronisation est située à égale distance de deux moules voisins - en l'occurrence les deux moules **M1** et **M2.**

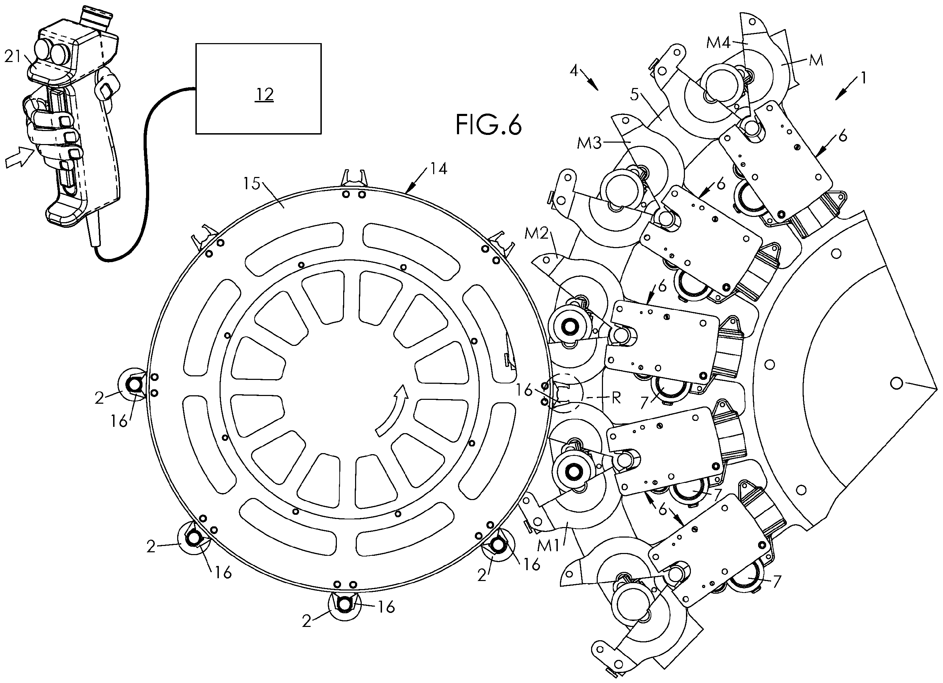

Sur ordre de l'opérateur, par ex. par une impulsion donnée à la manette **21** (comme illustré dans le coin supérieur gauche de la **FIG.6**), l'unité **12** de contrôle commande ensuite une rotation partielle du carrousel **5** et/ou de la roue **15** jusqu'à ce qu'un organe **16** de préhension soit placé dans la zone **R** de resynchronisation. En pratique, c'est à la fois le carrousel **5** et la roue **15** qui doivent être pivotés jusqu'à ce que la zone **R** de resynchronisation, sur le carrousel **5,** et un organe de préhension, sur la roue, se trouvent au point de transfert. Sur la **FIG.6****,** on a matérialisé par une flèche courbe une rotation antihoraire de la roue **15.**

Cette rotation est désynchronisée, c'est-à-dire que le carrousel **5** subit une rotation indépendante de la roue **15** et/ou la roue **15** subit une rotation indépendante du carrousel **5.**

Cependant l'unité **12** de contrôle conserve une information de position angulaire relative à chacun d'eux.

A la fin de cette opération, l'organe **16** de préhension se trouve entre les moules **M1** et **M2,** sensiblement à égale distance de chacun d'eux.

Les motorisations **8, 18** sont alors resynchronisées par l'unité **12** de contrôle, c'est-à-dire que toute rotation imprimée au carrousel **5** se traduit par une rotation simultanée de la roue **15,** d'un angle proportionnel à l'angle de rotation du carrousel **5,** dans le rapport de leurs diamètres respectifs.

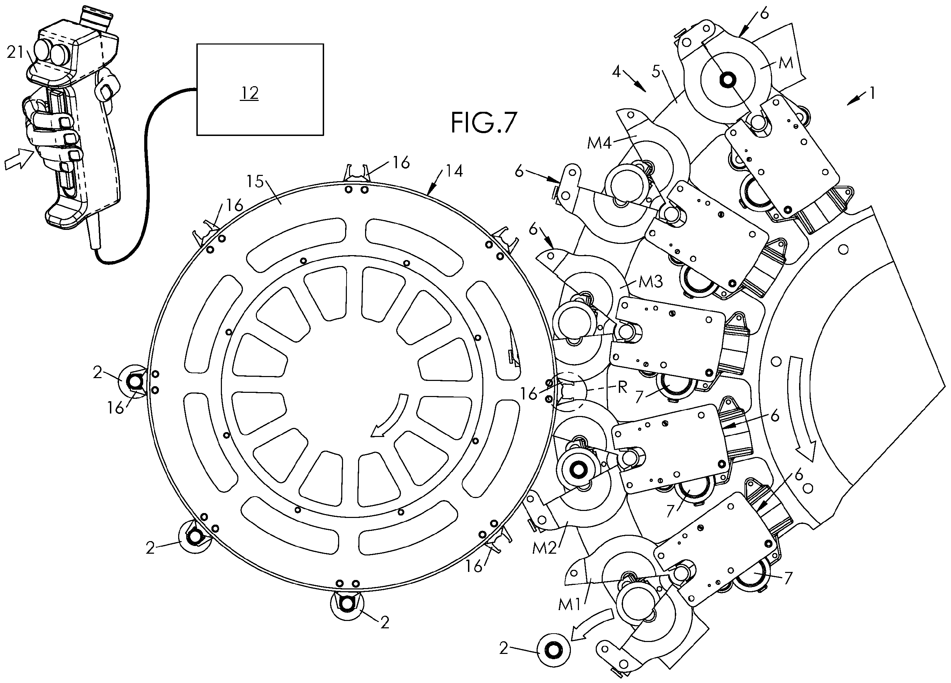

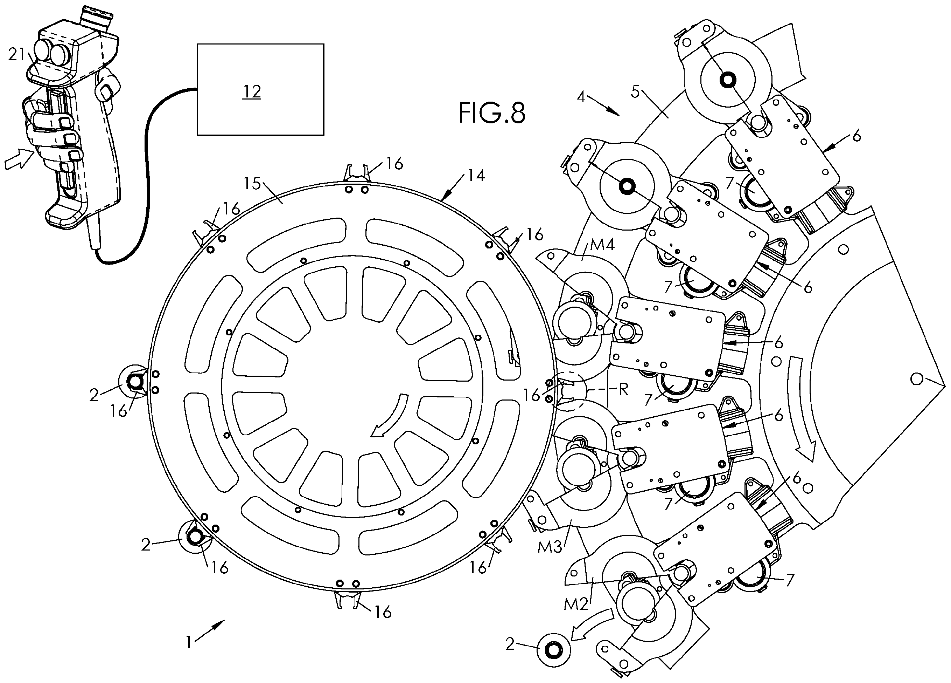

Puis, sur commande de l'opérateur par des impulsions successives sur la manette **21,** l'unité **12** de contrôle commande une rotation synchronisée, pas-à-pas, du carrousel **5** et de la roue **15** pour permettre le retrait des récipients **2** (ou des ébauches **3**) des moules voisins du point T de transfert :
- d'abord le récipient **2** du moule **M1 (****FIG.7****)**
- puis le récipient **2** du moule **M2 (****FIG.8****).**

Le terme « pas-à-pas » signifie qu'à chaque impulsion sur la manette le carrousel **5** subit une rotation d'un angle correspondant à l'écart angulaire entre deux moules **M** voisins, tandis que la roue **15** subit une rotation d'un angle correspondant à l'écart angulaire entre deux organes **16** de préhension voisins.

Le carrousel **5** et le dispositif **15** de transfert peuvent alors être repositionnés de manière à recaler les organes **16** de préhension dans l'alignement des moules **M.**

A cet effet, les motorisations **8, 18** sont à nouveau désynchronisées par l'unité de contrôle, sur commande de l'opérateur par impulsion sur la manette **21.**

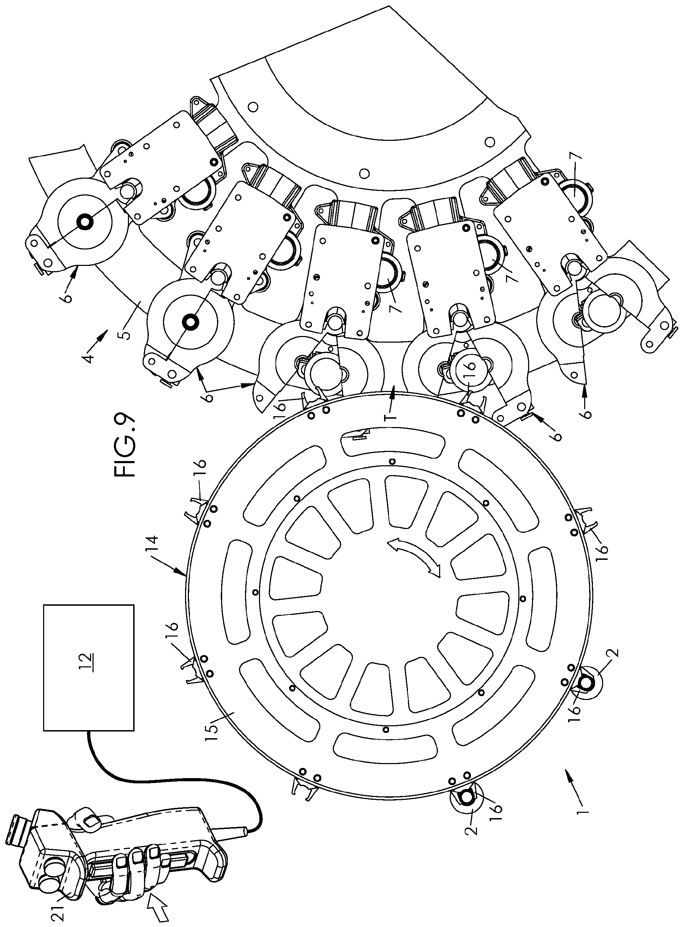

Puis, sur une nouvelle impulsion sur la manette **21,** l'unité **12** de contrôle commande une rotation partielle désynchronisée du carrousel **5** ou de la roue **15** (ou des deux) jusqu'à recaler l'alignement des organes **16** de préhension sur les moules **M (****FIG.9****).**

L'unité **12** de contrôle commande alors la resynchronisation des motorisations **8, 18.** Ainsi, lors de la rotation conjointe du carrousel **5** et de la roue **15,** les passages d'un moule **M** et d'un organe **16** de préhension au point T de transfert sont simultanés.

L'opération (ou les opérations) de maintenance nécessitée(s) pour la remise en état de l'installation **1** (par ex. le remplacement d'un composant défectueux) peut avoir été conduite avant ou pendant la procédure qui vient d'être expliquée, ou encore après celle-ci, selon le type et la localisation de cette (ces) opération(s).

La procédure de maintenance qui vient d'être décrite permet de mettre en sécurité tant l'installation **1** que l'opérateur, et ce tout au long des opérations de maintenance nécessitées par l'incident ayant conduit à l'interruption de la production.

En particulier, il est possible de faire pivoter le carrousel **5** et de vidanger les moules **M** sans risque d'endommager les organes **16** de préhension équipant le dispositif **13, 14** de transfert.

On notera que la présente description ne saurait être considérée comme limitée aux modes de réalisation décrits ci-dessus à titre d'exemple, et que certaines variantes ou alternatives à la portée d'un homme du métier pourraient être considérées sans sortir du cadre de l'invention telle que définie dans les revendications.

## Revendications

1. Procédé de maintenance d'une installation **(1)** de production de récipients **(2)** à partir d'ébauches **(3)** en matière plastique, qui comprend :
- Une machine **(4)** de soufflage comprenant un carrousel **(5)** tournant et une pluralité de postes **(6)** de formage incluant chacun un moule **(M)** monté sur le carrousel **(5)** et pouvant adopter une position ouverte pour permettre l'introduction d'une ébauche **(3)** et l'évacuation d'un récipient **(2),** et une position fermée pour permettre le formage d'un récipient **(2)** à partir de l'ébauche **(3)** ;
- Une motorisation **(8)** primaire couplée au carrousel **(5)** pour entraîner celui-ci dans une rotation cyclique ;
- Un dispositif **(13, 14)** de transfert, qui comprend une roue **(15)** pourvue d'une pluralité d'organes **(16)** de préhension, chacun apte, lors de la rotation de la roue **(15),** à venir se placer en un point **(T)** de transfert où l'organe **(16)** de préhension est normalement aligné sur un moule **(M)** pour y introduire une ébauche **(3)** ou y prélever un récipient **(2)** ;
- Une motorisation **(18)** secondaire couplée à la roue **(15)** et synchronisée à la motorisation **(8)** primaire pour entraîner la roue **(15)** dans une rotation cyclique synchronisée avec celle du carrousel **(5)** ;
- Une unité **(12)** de contrôle, reliée aux motorisations **(8, 18)** ;
Ce procédé étant **caractérisé en ce qu'**il comprend les étapes suivantes :
- Détection d'un défaut d'alignement des organes **(16)** de préhension par rapport aux moules **(M)** ;
- Immobilisation du carrousel **(5)** et de la roue **(15)** ;
- Désynchronisation des motorisations **(8, 18) ;**
- Définition, dans un repère lié au carrousel **(5),** d'une zone **(R)** de resynchronisation positionnée entre deux moules **(M1, M2)** situés, lors de l'immobilisation, de part et d'autre du point **(T)** de transfert ;
- Rotation partielle désynchronisée du carrousel **(5)** et/ou de la roue **(15),** jusqu'au placement d'un organe **(16)** de préhension dans la zone **(R)** de resynchronisation ;
- Resynchronisation des motorisations **(8, 18)** ;
- Rotation synchronisée, pas-à-pas, du carrousel **(5)** et de la roue **(15)** pour permettre le retrait des ébauches **(3)** ou des récipients **(2)** des moules **(M1, M2)** voisins du point de transfert ;
- Désynchronisation des motorisations **(8, 18)** ;
- Rotation partielle désynchronisée du carrousel **(5)** et/ou de la roue **(15),** jusqu'à recaler l'alignement des organes **(16)** de préhension sur les moules **(M)** ;
- Resynchronisation des motorisations **(8, 18).**

2. Procédé selon la revendication 1, **caractérisé en ce que** les étapes sont, en tout ou en partie, commandées par impulsion sur une manette **(21)** de commande pas-à-pas, reliée à l'unité **(12)** de contrôle.

3. Procédé selon la revendication **1** ou la revendication **2, caractérisée en ce que** la position angulaire instantanée du carrousel **(5)** et celle de la roue **(15)** sont fournies à l'unité **(12)** de contrôle par un codeur.

4. Procédé selon l'une des revendications précédentes, **caractérisé en ce que** la zone **(R)** de resynchronisation est située à égale distance de deux moules **(M1, M2)** voisins.

## Patentansprüche

1. Wartungsverfahren für eine Anlage (1) zur Herstellung von Behältern (2) aus Vorformlingen (3) aus Kunststoff, die umfasst:
- eine Blasmaschine (4), die einen drehenden Rundtisch (5) und eine Mehrzahl von Formstationen (6) umfasst, die jeweils ein Formwerkzeug (M) beinhalten, das an dem Rundtisch (5) montiert ist und eine geöffnete Position, um das Einführen eines Vorformlings (3) und das Entnehmen eines Behälters (2) zu ermöglichen, und eine geschlossene Position, um das Formen eines Behälters (2) aus dem Vorformling (3) zu ermöglichen, einnehmen kann;
- einen Primärantrieb (8), der an den Rundtisch (5) gekuppelt ist, um diesen zu einer zyklischen Drehbewegung anzutreiben;
- eine Übergabevorrichtung (13, 14), die ein Rad (15) umfasst, das mit einer Mehrzahl von Greiforganen (16) versehen ist, von denen jedes geeignet ist, sich bei der Drehbewegung des Rades (15) an einer Übergabestelle (T) zu platzieren, an der das Greiforgan (16) normalerweise mit einem Formwerkzeug (M) fluchtet, um einen Vorformling (3) in dieses einzuführen oder einen Behälter (2) aus diesem zu entnehmen;
- einen Sekundärantrieb (18), der an das Rad (15) gekuppelt ist und auf den Primärantrieb (8) synchronisiert ist, um das Rad (15) zu einer zyklischen Drehbewegung anzutreiben, die mit der des Rundtisches (5) synchronisiert ist;
- eine Steuereinheit (12), die mit den Antrieben (8, 18) verbunden ist;
wobei dieses Verfahren **dadurch gekennzeichnet ist, dass** es die folgenden Schritte umfasst:
- Erkennen eines Fluchtfehlers der Greiforgane (16) in Bezug auf die Formwerkzeuge (M);
- Anhalten des Rundtisches (5) und des Rades (15);
- Desynchronisierung der Antriebe (8, 18);
- Festlegen, an einer mit dem Rundtisch (5) verbundenen Markierung, eines Resynchronisierungsbereichs (R), der zwischen zwei Formwerkzeugen (M1, M2) angeordnet ist, die beim Anhalten beidseits der Übergabestelle (T) gelegen sind;
- desynchronisiertes teilweises Drehen des Rundtisches (5) und/oder des Rades (15) bis zur Platzierung eines Greiforgans (16) im Resynchronisierungsbereich (R) ;
- Resynchronisierung der Antriebe (8, 18);
- synchronisiertes schrittweises Drehen des Rundtisches (5) und des Rades (15), um das Entnehmen der Vorformlinge (3) oder der Behälter (2) aus den zur Übergabestelle benachbarten Formwerkzeugen (M1, M2) zu ermöglichen;
- Desynchronisierung der Antriebe (8, 18);
- desynchronisiertes teilweises Drehen des Rundtisches (5) und/oder des Rades (15) bis zum Neueinstellen des Fluchtens der Greiforgane (16) mit den Formwerkzeugen (M);
- Resynchronisierung der Antriebe (8, 18).

2. Verfahren nach Anspruch 1, **dadurch gekennzeichnet, dass** alle oder ein Teil der Schritte impulsartig an einem mit der Steuereinheit (12) verbundenen Hebel (21) zur Schrittsteuerung gesteuert werden.

3. Verfahren nach Anspruch 1 oder Anspruch 2, **dadurch gekennzeichnet, dass** die momentane Winkelposition des Rundtisches (5) und die des Rades (15) der Steuereinheit (12) von einem Codierer bereitgestellt werden.

4. Verfahren nach einem der vorhergehenden Ansprüche, **dadurch gekennzeichnet, dass** der Resynchronisierungsbereich (R) in gleichem Abstand von zwei benachbarten Formwerkzeugen (M1, M2) gelegen ist.

## Claims

1. Method for maintaining a plant (1) for the production of containers (2) from parisons (3) made of plastic material, which comprises:
- a blow moulding machine (4) comprising a rotating carousel (5) and a plurality of forming stations (6), each including a mould (M) mounted on the carousel (5) and able to adopt an open position to allow the introduction of a parison (3) and the removal of a container (2), and a closed position to allow the forming of a container (2) from the parison (3);
- a primary drive means (8) coupled to the carousel (5) in order to drive the latter in cyclic rotation;
- a transfer device (13, 14) which comprises a wheel (15) provided with a plurality of gripping members (16), each one able, during rotation of the wheel (15) to be placed at a transfer point (T) where the gripping member (16) is normally aligned with a mould (M) in order to introduce a parison (3) therein or remove a container (2) therefrom;
- a secondary drive means (18) coupled to the wheel (15) and synchronized with the primary drive means (8) to drive the wheel (15) in cyclic rotation synchronized with that of the carousel (5);
- a control unit (12) connected to the drive means (8, 18);
this method being **characterized in that** it comprises the following steps:
- detection of an error of alignment of the gripping members (16) relative to the moulds (M);
- immobilization of the carousel (5) and the wheel (15) ;
- desynchronization of the drive means (8, 18);
- definition, in a reference system linked to the carousel (5), of a resynchronization region (R) located between two moulds (M1, M2) which, during the immobilization, are located on either side of the transfer point (T);
- partial, desynchronized rotation of the carousel (5) and/or of the wheel (15) until a gripping member (16) is located in the resynchronization region (R) ;
- resynchronization of the drive means (8, 18);
- stepwise synchronized rotation of the carousel (5) and of the wheel (15) to permit removal of the parisons (3) or of the containers (2) from the moulds (M1, M2) adjacent to the transfer point;
- desynchronization of the drive means (8, 18);
- partial, desynchronized rotation of the carousel (5) and/or of the wheel (15) until the alignment between the gripping members (16) and the moulds (M) is reset;
- resynchronization of the drive means (8, 18).

2. Method according to Claim 1, **characterized in that** the steps are entirely or partially controlled by pressing on a stepwise control stick (21) connected to the control unit (12).

3. Method according to Claim 1 or Claim 2, **characterized in that** the instantaneous angular position of the carousel (5) and that of the wheel (15) are provided to the control unit (12) by an encoder.

4. Method according to one of the preceding claims, **characterized in that** the resynchronization region (R) is located equidistant from two adjacent moulds (M1, M2).
